## Europäisches Patentamt

## European Patent Office

## Office européen des brevets

(19)

(11) Veröffentlichungsnummer: **0 045 908**
**B1**

(12) **EUROPÄISCHE PATENTSCHRIFT**

(45) Veröffentlichungstag der Patentschrift:
14.03.84

(51) Int. Cl.³: **C 08 F 38/02**, C 08 J 5/18

(21) Anmeldenummer: **81105998.9**

(22) Anmeldetag: **30.07.81**

(54) **Folien aus Polyacetylen.**

(30) Priorität: **09.08.80 DE 3030194**

(43) Veröffentlichungstag der Anmeldung:
**17.02.82 Patentblatt 82/7**

(45) Bekanntmachung des Hinweises auf die Patenterteilung:
**14.03.84 Patentblatt 84/11**

(84) Benannte Vertragsstaaten:
**AT CH DE FR GB IT LI**

(56) Entgegenhaltungen:
**FR - A - 1 149 218**
**FR - A - 1 161 299**

**JOURNAL OF POLYMER SCIENCE, Polymer Chemistry Edition, Band 12, Nr. 1, Januar 1974, Seiten 11-20, New York, U.S.A. TAKEO ITO et al.: "Simultaneous polymerization and formation of polyacetylene film on the surface of concentrated soluble Ziegler-type catalyst solution"**

(73) Patentinhaber: **BAYER AG, Konzernverwaltung RP Patentabteilung, D-5090 Leverkusen 1 Bayerwerk (DE)**

(72) Erfinder: **Hocker, Jürgen, Dr., Eichenweg 6, D-5060 Bergisch-Gladbach 2 (DE)**
Erfinder: **Wieder, Wolfgang, Dr., 16, Résidence de la Côte Blanche, F-76170 Lillebonne (FR)**
Erfinder: **Dhein, Rolf, Dr., Deswatinesstrasse 30, D-4150 Krefeld 1 (DE)**

Folien aus Polyacetylen

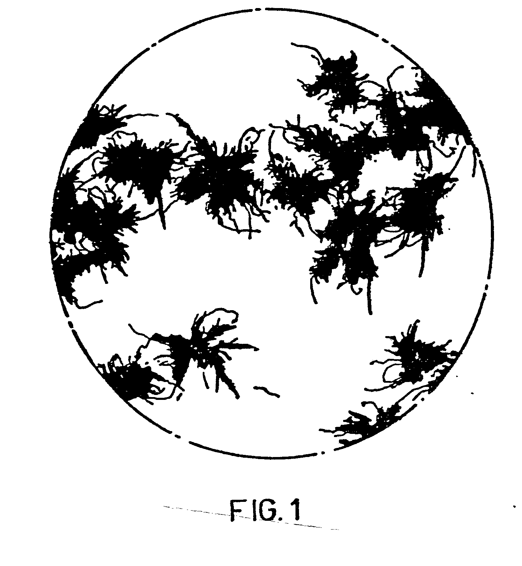

Gegenstand der Erfindung ist ein Verfahren zur Herstellung einer Suspension von Polyacetylen in Form von Partikeln eines Durchmessers von 0,01 bis 1 mm mit einer Vielzahl von faserigen Fortsätzen (gemäß Fig. 1), das dadurch gekennzeichnet ist, daß man Acetylen in ein organisches Suspendiermittel unter ständigem Durchmischen in Gegenwart eines metallorganischen Mischkatalysators in einer Menge entsprechend 10 bis 100 mMol Aluminium pro Liter Suspendiermittel bei Temperaturen von — 100 bis +80°C einleitet, bis sich pro Liter Suspendiermittel maximal 10 g, bevorzugt 1 bis 3 g Polyacetylen gebildet hat.

Die Polymerisation von Acetylen an metallorganischen Mischkatalysatoren ist bekannt. Journal Polymer Science, Band 12, Seiten 11 bis 20, gibt den bisherigen Stand der Entwicklung wieder. Polyacetylen ist in allen Lösungsmitteln unlöslich und fällt bei der Polymerisation von Acetylen an metallorganischen Mischkatalysatoren im allgemeinen als nicht verarbeitbares Pulver an. Die Polymerisation von Acetylen wird im allgemeinen durchgeführt, indem man Acetylengas unter anaeroben Bedingungen in eine Lösung eines metallorganischen Mischkatalysators in einem Lösungsmittel einleitet. Geeignete metallorganische Mischkatalysatoren — auch als Zieglerkatalysatoren bezeichnet — werden durch Umsetzung einer Verbindung eines der Metalle Titan, Vanadium, Chrom, Eisen, Kobalt oder Mangan (z. B. eines Halogenids, eines Esters oder eines Salzes mit einer organischen Säure) mit einem Aluminiumalkyl erhalten. Diese Polymerisation, die im allgemeinen bei starkem Durchmischen des Polymerisationsmediums ausgeführt wird, liefert das Polyacetylen in Form eines nicht weiter verarbeitbaren Pulvers. Um Polyacetylen in einer verwendbaren Form, beispielsweise als Folie, zu erhalten, muß man auf die Durchmischung verzichten und Katalysatoren vom Typ Ti $(OH_4H_9)_4/Al(C_2H_5)_3$ — als Katalysatoren auf Basis von Titanverbindungen und Aluminiumalkylen — benutzen. Leitet man Acetylen über eine Lösung dieses Katalysators in einem organischen Lösungsmittel, dann bildet sich ein Polyacetylenfilm an der Oberfläche, wenn man Agitation des Mediums sorgfältig vermeidet. Dieser Film kann abgehoben und untersucht werden. Offensichtlich sind aber größere Flächen auf diese Weise nicht herstellbar, und die Dicke des Films festzulegen ist schwierig.

Erfindungsgemäß kann man Polyacetylen in Form von Teilchen mit faseriger Struktur herstellen. Um dies zu erreichen, stellt man zunächst eine Lösung eines metallorganischen Mischkatalysators in einem inerten Lösungsmittel her und leitet unter starkem Durchmischen gasförmiges Acetylen ein, wobei man die oben angegebenen Bedingungen für Katalysatormenge, Temperatur und einzuleitende Menge Acetylen einhalten muß.

Unter metallorganischen Mischkatalysatoren — auch Ziegler-Katalysatoren — werden Umsetzungsprodukte aus, einerseits, Verbindungen von Schwermetallen der Gruppen 4b, 5b, 6b, 7b und 8 des Periodensystems der Elemente (Handbook of Chemistry and Physics 47. Auflage (1966), Seite B 3 — Chemical Rubber Comp. Cleveland, Ohio) und, andererseits, Aluminiumalkylen oder -alkylhalogeniden verstanden. In diesen Umsetzungsprodukten ist das Molverhältnis Aluminium : Schwermetall im allgemeinen 1 : 1 bis 20 : 1, bevorzugt 2 : 1 bis 10 : 1.

Besonders geeignete Schwermetallverbindungen sind die Halogenide (insbesondere die Chloride), Oxihalogenide und Alkoxide von Titan, Vanadium, Chrom und Wolfram, wie $TiCl_4$, $WCl_6$, $VOCl_3$. Die Aluminiumalkylverbindungen können durch die Formeln $AlR_3$, $AlXR_2$, $AlX_2R$ und $Al_2X_3R_3$ wiedergegeben werden, in denen X für Halogen, insbesondere Chlor und R für $C_1$- bis $C_{12}$-Alkyl wie Methyl, Ethyl, Isobutyl, stehen. Besonders geeignet sind Triethylaluminium, Trioctylaluminium und Triisobutylaluminium.

Geeignete Lösungsmittel sind insbesondere Kohlenwasserstoffe wie Benzol, Toluol, Hexan, Tretalin, Dekalin, halogenierte Kohlenwasserstoffe wie Methylenchlorid, Chlorbenzol.

Die Katalysatoren werden durch Umsetzung der Schwermetallverbindung und der Aluminiumverbindung im Lösungsmittel bei Temperaturen von — 100 bis +30°C in an sich bekannter Weise hergestellt. Zur nachfolgenden Polymerisation benutzt man im allgemeinen Lösungen, die 10 bis 100 mMol Aluminium pro Liter Lösungsmittel enthalten. In diese Lösung wird Acetylen unter anaeroben Bedingungen eingeleitet, bei Temperaturen von — 100 bis +80°C, bevorzugt — 80 bis — 30°C. Es entsteht dabei eine Suspension von Polyacetylen. Die suspendierten Teilchen sehen unter dem Mikroskop wie kleine Kletten aus. Die Fig. 1 veranschaulicht die Form der Teilchen. Ihr Durchmesser ist i. a. 0,01 bis 1 mm. Durch Abfiltrieren der Polymerisationsflüssigkeit im Vakuum (Absaugen) bildet sich aus diesen »Kletten« ein zusammenhängender Belag, eine Folie, die von ihrer Unterlage (Filterpapier) abgehoben werden kann.

Ausführungsbeispiel

In eine 2-l-Becherglasrührapparatur werden 1300 ml Toluol vorgelegt und 300 ml unter einem Stickstoffstrom wieder abdestilliert. Man kühlt auf — 78°C ab, setzt 4,2 ml (12,5 mMol) Titantetrabutylat (100%ig) und 50 ml (50 mMol) Aluminiumtriisobutyl 1 molar in Toluol zu.

Unter Rühren werden innerhalb einer Stunde 10 g Acetylen bei — 78°C durch die Katalysatorlösung geleitet, wobei dunkles Polyacetylen ausfällt. Die Reaktion wird mit 0,5 g 4-Methyl-2,6-di-tert.-butylphenol (Ionol) in 400 ml absolutem Toluol abgestoppt und die Temperatur unter einem Stickstoffstrom auf Raumtemperatur ansteigen gelassen. Unter dem Mikroskop zeigt das Reaktionsgemisch große, dunkelviolette klettenartige Polyacetylengebilde, die beim Absaugen auf dem Filter zu einer stabilen, metallisch glänzenden Folie verfilzen.

Die Ausbeute an Polyacetylen beträgt 2,5 g.

**Patentansprüche:**

Verfahren zur Herstellung einer Suspension von Polyacetylen in Form von Partikeln eines Durchmessers von 0,01 bis 1 mm mit einer Vielzahl von faserigen Fortsätzen (gemäß Fig. 1), dadurch gekennzeichnet, daß man Acetylen in ein organisches Suspendiermittel unter ständigem Durchmischen in Gegenwart eines metallorganischen Mischkatalysators in einer Menge entsprechend 10 bis 100 mMol Aluminium pro Liter Suspendiermittel bei Temperaturen von − 100 bis +80°C einleitet, bis sich pro Liter Suspendiermittel maximal 10 g, ·bevorzugt 1 bis 3 g Polyacetylen gebildet hat.

2. Verwendung der Suspension gemäß Anspruch 1 zur Herstellung von papierähnlichen Folien aus Polyacetylen.

**Claims**

1. Process for the preparation of a suspension of polyacetylene in the from of particles of a diameter of 0.01 to 1 mm which have a large number of fibrous projections (as in Figure 1), characterised in that acetylene is introduced into an organic suspending agent with constant mixing in the presence of an organometallic mixed catalyst in an amount corresponding to 10 to 100 mmol of aluminium per litre of suspending agent at temperatures of − 100 to +80°C, until a maximum of 10 g, preferably 1 to 3 g of polyacetylene per litre of suspending agent has formed.

2. Use of the suspension according to Claim 1 for producing paper-like foils of polyacetylene.

**Revendications**

1. Procédé pour la fabrication d'une suspension de polyacétylène sous forme de particules d'un diamètre de 0,01 à 1 mm comportant un grand nombre de prolongements fibreux (selon la figure 1), caractérisé en ce que l'on envoie de l'acétylène dans un milieu de suspension organique avec brassage continu, en présence d'un catalyseur mixte organométallique en quantité correspondant à 10 à 100 mmol d'aluminium par litre d'agent de suspension, à des températures de − 100 à +80°C, jusqu'à ce qu'il se soit formé au maximum 10 g de polyacétylène, de préférence 1 à 3 g, par litre d'agent de suspension.

2. Utilisation de la suspension selon la revendication 1, pour la fabrication de feuilles en polyacétylène semblables au papier.

FIG. 1